# EUROPÄISCHE PATENTSCHRIFT

(11) **EP 0 383 121 B1**
(45) Veröffentlichungstag und Bekanntmachung des Hinweises auf die Patenterteilung: **03.11.1993**
(21) Anmeldenummer: 90102145.1
(22) Anmeldetag: 03.02.1990
(51) Int. Cl.: A01D 89/00, A01D 90/02

(54) **Landwirtschafliche Erntemaschine mit Tasträdervorrichtung**
Agricultural harvesting machine with a touch wheel device
Machine à moisson agricole avec dispositif de roues palpeuses

(30) Priorität: 14.02.1989 DE 8901705 U
(43) Veröffentlichungstag der Anmeldung: 22.08.1990
(73) Patentinhaber: Alois Pöttinger Maschinenfabrik GmbH, A-4710 Grieskirchen (AT)
(72) Erfinder: Menzl, Herbert, A-4600 Wels (AT)
(74) Vertreter: Dupal, Helmut, Dipl-Ing.

(56) Entgegenhaltungen:
- EP-A- 224 424
- DE-A- 1 457 967
- DE-A- 2 622 486
- FR-A- 2 241 236
- US-A- 2 620 203

## Beschreibung

Die Erfindung hat eine landwirtschaftliche Erntemaschine mit einer Aufsammeltrommel, die von einer Tasträdervorrichtung beiderseits abgestützt wird, wie auch aus der EP-A-0 224 424 bekannt ist.

Aufsammelvorrichtungen werden für Selbstladewagen, Aufsammelballenpressen, Erntevorsätze von Feldhäckslern verwendet.

Bei Maschinen der genannten Art streichen die Spitzen der Rechzinken in sehr geringem Abstand über den Boden, so daß sie sich bei Bodenunebenheiten entweder sehr leicht von der von der Bodenoberfläche entfernen und Erntegut liegen lassen oder in den Boden einstechen und zu Futterverschmutzung oder Betriebsstörungen Anlaß geben.

Mit zunehmenden Arbeitsgeschwindigkeiten neigen die Maschinen rasch dazu Auf-und Abwärtsbewegungen auszuführen, wodurch die saubere Aufnahme oder Bearbeitung des Erntegutes gestört wird. Bei feuchtem Boden bilden sich überdies leicht Spurrillen durch die Schlepperfahrt, die Anlaß zu mangelhafter Bodenführung geben, wenn das Tastrad einer Seite einer Aufsammeltrommel in die Spurrille gerät oder wenn Spurrillen beim Arbeiten gequert werden.

Aufgabe der Erfindung ist es diese Nachteile zu beseitigen.

Die Lösung der Aufgabe besteht in der Anwendung der Merkmale des kennzeichnenden Teiles des Anspruches 1 auf dessen Gattungsbegriff.

Es wird durch Anwendung dieser Tasträdervorrichtung jeweils zu beiden Seiten einer Aufsammeltrommel eine wesentliche Verbesserung der Bodenführung erreicht, indem die Aufsammeltrommel nur etwa um die Hälfte der von einem Tastrad überfahrenen Bodenunebenheit nach oben oder unten nachgeführt wird. Dadurch ergibt sich ein wesentlich ruhigerer Lauf der Maschine und es ist möglich eine höhere Arbeitsgeschwindigkeit anzuwenden.

Die Unteransprüche 2 bis 5, auf die als Teil der Beschreibung besonders hingewiesen wird, stellen besonders vorteilhafte Weiterbildungen der Erfindung unter Schutz.

Bei einer Aufsammeltrommel ist es besonders vorteilhaft, wenn die Tasträder in der Spur versetzt zueinander angeordnet sind, wodurch das Fahren in Spurrillen wesentlich besser ausgeglichen werden kann, wenn nur ein Tastrad in der eingetieften Spur läuft.

Bei besonders feuchtem und weichem Boden ist die Anwendung zusätzlicher Tasträder günstig, weil das auf den Tasträdern lastende Gewicht besser verteilt ist.

Die Erfindung wird an Hand der Zeichnung mehrerer Ausführungsformen beschrieben.

Es zeigt
- Fig. 1: eine Aufsammeltrommel mit der Tasträdervorrichtung in Seitenansicht, schematisch,
- Fig. 2: eine Draufsicht auf eine Tasträdervorrichtung mit den Tasträdern an einer Seite der Doppelschwinge und
- Fig. 3: eine Draufsicht auf eine Tasträdervorrichtung mit den Tasträdern auf beiden Seiten, zusätzliche Tasträder angedeutet.

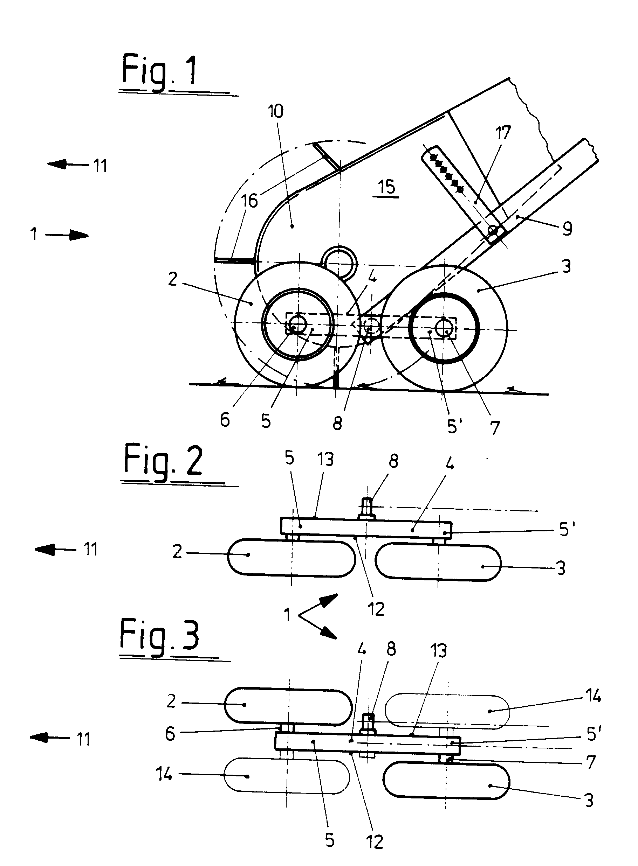

An den Seitenwangen 15 einer Aufsammeltrommel 10, deren Rechzinken 16 dargestellt sind und deren Bewegungskreis angedeutet ist, ist ein Träger als Rahmenteil 9 mit einem Verstellhebel 17 zur Einstellung der Tasthöhe der Tasträdervorrichtung 1 festgelegt, an dessen unterem Ende eine Pendelachse 8 eingesetzt ist, auf der eine Doppelschwinge 4 gelagert ist, an deren beiden Enden 5,5′ die Laufachsen 6 und 7 des vorderen Tastrades 2 und des hinteren Tastrades 3 gelagert sind (Fig.1 ) .

In Fig. 2 ist diese Tasträdervorrichtung 1 in Draufsicht zu sehen, bei der beide Tasträder 2 und 3 an der vom Rahmenteil 9 abgewandten Seite 12 der Doppelschwinge 4 gelagert sind.

In Fig. 3 ist eine Tasträdervorrichtung 1 wiedergegeben, bei der das vordere Tastrad 2 an der dem Rahmenteil 9 zugewandten Seite 13 und das hintere Tastrad 3 an der dem Rahmenteil 9 abgewandten Seite 12 der Doppelschwinge 4 an dieser gelagert ist.

Für die Herabsetzung des Bodendruckes ist jeweils an der gegenüberliegenden Seite der Laufachse 6 und/oder 7 ein zusätzliches Tastrad 14 gelagert.

### Legende :

- 1: Tasträdervorrichtung
- 2: vorderes Tastrad
- 3: hinteres Tastrad
- 4: Doppelschwinge
- 5,5′: Enden der Doppelschwinge 4
- 6: Laufachse des vordernen Tastrades 2
- 7: Laufachse des hinteren Tastrades 3
- 8: Pendelachse der Doppelschwinge 4
- 9: Rahmenteil einer Aufsammeltrommel 10
- 10: Aufsammeltrommel
- 11: Arbeitsrichtung
- 12: dem Rahmenteil 9 abgewandte Seite der Doppelschwinge 4
- 13: dem Rahmenteil 9 zugewandte Seite der Doppelschwinge 4
- 14: zusätzliches Tastrad
- 15: Seitenwange der Aufsammeltrommel 10
- 16: Rechzinken
- 17: Verstellhebel des Rahmenteiles 9

## Patentansprüche

1. Landwirtschaftliche Erntemaschine mit einer Aufsammeltrommel, die von einer Tasträdervorrichtung beiderseits abgestützt wird, dadurch gekennzeichnet, daß die Tasträdervorrichtung ein vorderes Tastrad (2) und ein hinteres Tastrad (3) an den beiden Enden (5,5') einer Doppelschwinge (4) umfaßt, die an Laufachsen (6,7) gelagert sind, während die Doppelschwinge (4) an einer waagerecht ausgerichteten Pendelachse (8) verschwenkbar geführt ist, von der an jeder Seite des Rahmenteiles (9) der Aufsammeltrommel (10) eine angebracht ist, an der jeweils eine Doppelschwinge (4) gelagert ist.

2. Landwirtschaftliche Erntemaschine nach dem vorhergehenden Anspruch, dadurch gekennzeichnet, daß die beiden Tasträder (2,3) fluchtend an der von dem Rahmenteil (9) der Maschine abgewandten Seite (12) der Doppelschwinge (4) gelagert sind.

3. Landwirtschaftliche Erntemaschine nach Anspruch 1, dadurch gekennzeichnet, daß das vordere Tastrad (2) auf der der Maschine zugewandten Seite (13) der Doppelschwinge (4) und das hintere Tastrad (3) auf der abgewandten Seite (12) gelagert ist.

4. Landwirtschaftliche Erntemaschine nach einem der Ansprüche 2 oder 3, dadurch gekennzeichnet, daß wenigstens ein zusätzliches Tastrad (14) auf der gleichen Laufachse (6 oder 7) an der gegenüberliegenden Seite der Doppelschwinge (4) gelagert ist.

5. Landwirtschaftliche Erntemaschine nach einem der Ansprüche 2 oder 3, dadurch gekennzeichnet, daß ein Ende (5) der Doppelschwinge (4) vor und ein Ende (5') der Doppelschwinge (4) hinter dem Bereich liegen, in dem die Rechzinken der Aufsammeltrommel (10) den Boden berühren.

## Claims

1. Forage harvester with a pick up supported on both sides by means of a depth wheel device, characterised in that the depth wheel device comprises a front depth wheel (2) and a rear depth wheel (3) on both ends (5, 5') of a double swing arm (4) which are pivoted to running axles (6,7), whereas the double swing arm (4) is pivoted on an horizontally aligned swing axle (8) of which swing axle one is attatched to each side of the framework (9) of the pick up (10), to which swing axle one double swing arm (4) is pivoted respectively.

2. Forage harvester according to the preceding claim, characterised in that both depth wheels (2,3) are pivoted in alignment on that side (12) of the double swing arm (4) that is turned off from the framework of the machine.

3. Forage harvester according to claim 1, characterised in that the front depth wheel (2) is pivoted to that side (13) of the double swing arm (4) that is turned towards the machine and that the rear depth wheel (3) is pivoted to that side (12) that is turned off from it.

4. Forage harvester according to one of claims 2 or 3, charcterised in that at least one additional depth wheel (14) is pivoted on the same running axle (6 or 7) on the opposite side of the double swing arm (4).

5. Forage harvester according to one of claims 2 or 3, charcterised in that one end (5) of the double swing arm (4) is arranged before and one end (5') of the double swing arm (4) behind the area in which the rake tines of the pick up (10) touch the ground.

## Revendications

1. Ramasseuse agricole avec dispositif de ramassage étayé de tous les deux côtés par un dispositif à roues de jauge, caracterisée en ce que le dispositif à roues de jauge comporte une roue de jauge avant (2) et une roue de jauge arrière (3) aux deux extrémités (5,5') d'un bras agitent double (4) qui sont montées de façon pivotante sur des axes de rotation (6,7), tandis que le bras agitant double (4) est monté de façon pivotante le long d'un axe pendulaire (8) ajusté horizontalement, duquel un est attaché respectivement sur chaque côté du châssis (9) du dispositif de ramassage (10), sur lequel un bras agitent double (4) est monté de façon pivotante respectivement.

2. Ramasseuese agricole selon la revendication précédente, caracterisée en ce que les deux roues de jauge (2,3) sont montées de façon pivotante et alignée sur ce côté (12) du bras agitent double (4) qui est détourné du châssis (9) de la machine.

3. Remasseuse agricole selon la revendication 1, caracterisée en ce que la roue de jauge avant (2) est montée de façon pivotante sur ce côté (13) du bras agitent double (4) qui est tourné vers la machine et la roue de jauge arrière (3) est montée sur le côté détourné.

4. Ramasseuse agricole selon une ou plusieurs des revendications 2 ou 3, caracterisée en ce que au moins une roue de jauge supplémentaire (14) est montée de façon pivotante sur le même axe de rotation (6 ou 7) au côté opposé du bras agitent double (4).

5. Ramasseuse agricole selon une des revendications 2 ou 3, caracterisée en ce qu'une extrémité (5) du bras agitent double (4) est située avant et une extrémité (5') du bras agitent double (4) est située derrière la zone dans laquelle les dents du râteau du dispositif de ramassage touchent le sol.
